# EUROPEAN PATENT SPECIFICATION

(11) **EP 3 020 662 B1**
(45) Date of publication and mention of the grant of the patent: **10.01.2018**
(21) Application number: 14193088.3
(22) Date of filing: 13.11.2014
(51) Int. Cl.: B65G 47/64, A01G 5/00, B65G 15/14

(54) **Apparatus for conveying cut flowers**
Vorrichtung zur Beförderung von Schnittblumen
Appareil de transport de fleurs coupées

(43) Date of publication of application: 18.05.2016
(73) Proprietor: Bercomex B.V., 1624 PB Hoorn (NL)
(72) Inventor: Miedema, Willibrordus Jaring, 1778 KN Westerland (NL)
(74) Representative: Voncken, Bartholomeus Maria Ch.

(56) References cited:
- EP-A1- 2 724 947
- JP-A- 2000 266 589
- JP-A- 2002 316 708
- NL-A- 7 202 266
- NL-C2- 1 011 963
- US-A- 4 142 643

## Description

The invention relates to an apparatus for conveying cut flowers, comprising a conveyor assembly with opposite, cooperating endless belts for there between conveying the cut flowers in a vertical position.

Such an apparatus is known from NL-C-1011963.

The cooperating endless belts of the conveyor assembly may be embodied in many different ways. For example, each belt may be a single elongate member (with, for example, a circular or rectangular cross section) or may comprise a number of parallel members (for example a number of cords) positioned one above the other. The material from which such belts are manufactured, may vary too in many ways, for example depending from the type of cut flowers to be conveyed (for example one type of cut flowers may require a more firm grip, whereas another type of cut flowers may require a more soft grip; in the latter case the belts may be manufactured of, or be covered with, a spongy material). For driving said endless belts, drive motors will be provided.

The cut flowers are conveyed between cooperating endless belts of the conveyor assembly in a vertical position, preferably with the flower crown hanging down. In such a position the apparatus will supply the cut flowers to subsequent processing units, for example a unit for cutting the cut flowers to length. It is a disadvantage, however, that the vertical position of the cut flowers relative to the conveyor assembly varies and as a result the final processed cut flowers will not be uniform (for example the cut flowers may have different lengths). JP 2000266589 discloses an apparatus according to the preamble of claim 1. In view of the above it is an object of the present invention to provide an improved apparatus of the above type.

In accordance with the present invention the apparatus is characterized as set forth in the characterizing part of claim 1. The apparatus according to the present invention allows to change the vertical position of a cut flower relative to the conveyor assembly. Specifically, by changing the vertical position of the output location of the first conveyor section the vertical position of the cut flower relative to the second conveyor section can set to be in correspondence with a desired vertical position. For example, when an arriving cut flower has a vertical position which is too low, the output location can be elevated, such that the cut flower will obtain the desired vertical position (elevation) at the second conveyor section. When, to the contrary, an arriving cut flower has a vertical position which is too high, the output location can be lowered, such that the cut flower again will obtain the desired vertical position at the second conveyor section. As a result all cut flowers will have the same vertical position at the second conveyor.

It is noted that for the definition of "the same vertical position" of the cut flowers reference is made to a specific part of such cut flowers, generally the flower crown. For cut flowers with different lengths of the stem this means that in such a situation the tip of the stems will have different vertical positions (which then by a cutting unit may be equalised).

The manner in which the vertical position of the output location of the first conveyor section is changed, tion substantially coinciding, as considered in a horizontal direction, with said fixed position of the output location of the first conveyor section and wherein the first conveyor section at least partially can be moved vertically for changing the vertical position of the output location relative to the input location of the second conveyor section.

In such embodiments the output location always is defined by the same part of the first conveyor section and at least said part of the first conveyor section is moved vertically (up and down) for changing the vertical position of the output location relative to the input location of the second conveyor section. If a cut flower has to be lowered, said part of the first conveyor section is moved down and if a cut flower has to be lifted, said part of the first conveyor section is moved up.

A first manner for at least partially vertically moving the first conveyor section (with output location) is realised in an embodiment of the apparatus, wherein the first conveyor section is mounted for a rotation around a substantially horizontally extending pivot axis. It should be noted that, although in such an embodiment the output location moves vertically along an arc of a circle, the movement substantially will be vertically up and down because of the generally rather limited distances over which such a movement will occur.

Constructively it is conceivable that the first conveyor section is mounted in a frame which is mounted for a rotation around said substantially horizontally extending pivot axis. For obtaining the required rotational or pivotal movement of the first conveyor section around the pivot axis a drive unit of any known type (for example a crank drive) acting upon the frame may be used.

In one embodiment the pivot axis is located in the region of the input location of the first conveyor section. As a result the actual rotational position of the first conveyor section will not (or hardly) influence the position of an arriving cut flower when entering the first conveyor section at the input location thereof. An advantage of this embodiment is that it allows to supply a cut flower to the first conveyor section already before a previous cut flower has been transferred to the second conveyor section, thus increasing the capacity of the apparatus.

A second manner for at least partially vertically moving the first conveyor section (with output location) is realised in an embodiment of the apparatus, wherein the first conveyor section is mounted for a translation in vertical direction. In such an embodiment the first conveyor section in its entirety moves up and down (for example along respective guides and driven by a drive unit as explained before). The specific advantage of such an embodiment over the previous embodiment (with rotating first conveyor section) is that the orientation of the cut flower remains the same without creating an angle with the vertical.

Irrespective whether an embodiment with rotating or an embodiment with translating first conveyor section is used, it is conceivable that the apparatus comprises at least two first conveyor sections in succession, wherein each following first conveyor section functions as second conveyor section for a previous first conveyor section. This allows to achieve a larger correction of the vertical position of the cut flowers.

Specifically, when the first conveyor sections are mounted for a rotation around a substantially horizontally extending pivot axis, successive first conveyor sections may be positioned at different levels. For example a so-called cascade arrangement may be used in which successive first conveyor sections are positioned at ever increasing or decreasing levels (but as a non-limiting alternative also embodiments are conceivable in which successive first conveyor sections in an alternating manner are positioned at a higher and lower level).

The manner in which the vertical position of the output location of the first conveyor section is changed, also may occur as defined by a second group of embodiments of the apparatus, wherein the first conveyor section has a stationary position and extends vertically inclined relative to the second conveyor section, wherein the second conveyor section, as considered in a horizontal direction, extends at least from the input location of the first conveyor section and wherein the position of the output location of the first conveyor section can be varied along the extension of the first conveyor section.

In such embodiments the position of the output location of the first conveyor section not always is defined by the same part of the first conveyor section but varies there along. Thus, in other words, the moment of transferring the cut flower from the first conveyor section towards the second conveyor section will vary and because the first conveyor section extends inclined to the second conveyor section this also will result in changing the amount of correction of the vertical position of the cut flower. The further the position of the output location is located along the first conveyor section (or in other words, the larger the distance between the input location and output location of the first conveyor section), the larger the resulting correcting vertical displacement of the cut flower relative to the second conveyor section will be.

In one embodiment the cooperating endless belts of the first conveyor section and/or the cooperating endless belts of the second conveyor section are movable relative to each other for varying a clamping force acting on a cut flower. An arriving cut flower of which the vertical position should be corrected will be clamped between the cooperating endless belts of the first conveyor section and be moved there along. It is possible that the cooperating belts of the second conveyor during this stage completely disengage the cut flower, but also that these still engage the cut flower, however with a lower clamping force (or with less friction) such that the vertical position of the cut flower relative to the second conveyor section may change as desired. When the cut flower has reached the required vertical position (and thus the specific output location along the first conveyor section), the endless belts of the first conveyor section may disengage the cut flower in such a way that the cut flowers will be conveyed by the second conveyor section.

It is conceivable too that the clamping force of the first conveyor section is not lowered (meaning that the respective endless belts are not moved relative to each other), but that the clamping force of the second conveyor section is increased sufficiently to achieve the same result (by moving its respective endless belts towards each other). It follows that the clamping forces of the first and second conveyor sections may be changed too in many different manners other than those described above (by moving the endless belts relative to each other at appropriate moments) for defining the moment of transferal of the cut flower from the first towards the second conveyor section (or also the moment of transferal of the cut flower from the second towards the first conveyor section).

If a cut flower arrives already having a correct vertical position, the first conveyor section will not engage it in such a manner that it will be moved vertically.

It is possible too that the position of the input location of the first conveyor section can be varied (for example likewise with an embodiment in which the cooperating endless belts of the first conveyor section and/or the cooperating endless belts of the second conveyor section are movable relative to each other for varying a clamping force acting on a cut flower). This too allows to vary the vertical displacement of a cut flower.

In one embodiment the second conveyor section, as considered in a horizontal direction, also extends in a region ahead of the first conveyor section. Thus, the second conveyor is also used for supplying a cut flower to the first conveyor section, in addition to receiving a cut flower therefrom. For cut flowers already arriving with a correct vertical position the second conveyor section remains responsible for conveying the cut flower throughout the entire apparatus without using the first conveyor section.

In another embodiment the apparatus further comprises an additional first conveyor section with a stationary position and extending vertically inclined in an opposite direction with respect to the second conveyor section. This allows a correction of the vertical position of cut flowers in both directions (up and down).

Finally the apparatus according to the present invention comprises at least one sensor positioned, as considered in a horizontal direction, ahead of the first conveyor section and adjacent the conveyor assembly for generating a sensor signal based upon a vertical position of an arriving cut flower and a control unit firstly connected to the at least one sensor and capable of receiving said sensor signal and secondly connected to a drive unit responsible for changing at least the vertical position of the output location of the first conveyor section and capable of sending an activating signal to said drive unit.

Such drive unit may be a drive unit for realizing the rotational or translational displacement of the first conveyor section or a drive unit for moving the endless belts relative to each other, as discussed above.

Hereinafter the invention will be elucidated while referring to the drawings, in which:
Figure 1 shows a schematic side elevational view of a state of the art apparatus;
Figure 2 shows a schematic top plan view of the apparatus of figure 1;
Figure 3 shows a first embodiment of an apparatus according to the present invention in a schematic side elevational view and in three different positions;
Figure 4 shows a second embodiment of an apparatus according to the present invention in a schematic side elevational view and in two different positions;
Figure 5 shows a third embodiment of an apparatus according to the present invention in a schematic side elevational view, and

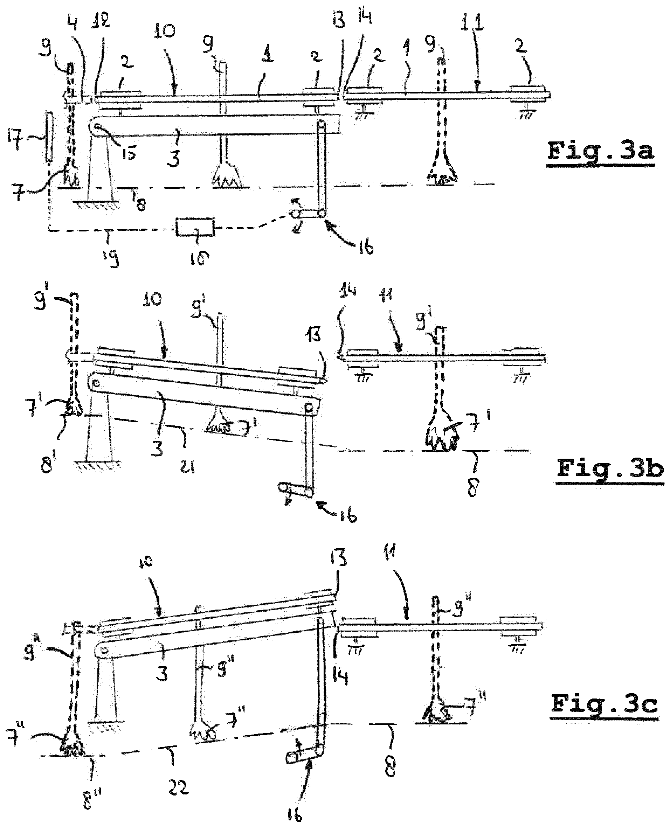

Figure 3 shows a fourth embodiment of an apparatus according to the present invention in a schematic side elevational view.

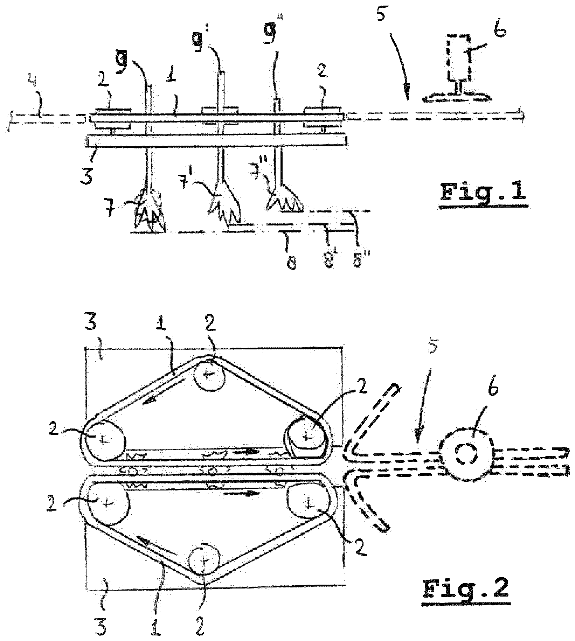

Firstly referring to figures 1 and 2, a state of the art apparatus for conveying cut flowers is illustrated. The apparatus comprises a conveyor assembly with opposite, cooperating endless belts 1 each running (in the direction as indicated by arrows in figure 2) around and driven by guide wheels 2 for there between in a vertical position (generally with the flower crown 7 facing down) conveying the cut flowers (in figure 1 from left to right). The endless belts 1 with drive wheels 2 may be mounted on a frame 3. Although figure 2 illustrates two frames 3, these also may be united into a single frame.

For feeding cut flowers to the apparatus, a feeding conveyor 4 (illustrated left in broken lines) may be present; such a feeding conveyor 4 also may be of a type with cooperating endless belts, but as an alternative may be of a different type, for example a conveyor with gripping members for the cut flowers which are movable between a gripping position and a release position. Commonly the apparatus delivers the cut flower to a successive processing unit 5 (shown right in broken lines), for example comprising a cutting unit 6 for cutting the cut flowers to length.

When cut flowers 9, 9', 9" arrive of which the flower crowns 7, 7', 7" are positioned at different levels 8, 8', 8", it, for example, may be a problem that the cutting unit 6 will yield cut flowers which are not cut to the same length. The present invention aims at solving this problem (or problems which will occur at other types of processing units 5).

Figure 3 shows a first embodiment of an apparatus according to the present invention in three different positions. Generally the conveyor assembly of this apparatus comprises a first conveyor section 10 and a second conveyor section 11, both with cooperating endless belts 1. The first conveyor section 11 has an input location 12 intended for receiving a cut flower 9 (for example from a feeding conveyor 4) and an output location 13 intended for transferring said cut flower 9 to the second conveyor section 11. Said output location 13 has a fixed position along the extension of the first conveyor section 10 (in other words, the distance between the output location 13 and the input location 12 is constant), but the vertical position of the output location 13 can be changed (in a manner to be described below) for changing its vertical position, and thus also the vertical position of a cut flower 9, relative to the second conveyor section 11.

The second conveyor section 11 has an input location 14 substantially coinciding, as considered in a horizontal direction, with said fixed position of the output location 13 of the first conveyor section 10.

The first conveyor section 10 is mounted on a frame 3 which is mounted for a rotation around a substantially horizontally extending stationary pivot axis 15 (in this embodiment located in the region of the input location 12 of the first conveyor section 10), such that the first conveyor section 10 at least partially can be moved vertically (or substantially vertically; in fact the movement will describe an arc of a circle with the pivot axis 15 as a centre) for changing the vertical position of the output location 13 relative to the input location 14 of the second conveyor section 11.

For obtaining the rotational movement of the frame 3 with first conveyor section 10, a drive unit 16 is provided (for example comprising a crank mechanism). For controlling said drive unit 16, the apparatus further may comprise at least one sensor 17 positioned, as considered in a horizontal direction, ahead of the first conveyor section 10 and adjacent the conveyor assembly for generating a sensor signal based upon a vertical position of an arriving cut flower 9 (for example based upon the vertical position of the flower crown 7) and a control unit 18 connected to said sensor 17 by a line 19 and capable of receiving said sensor signal, and connected to the drive unit 16 through a line 20 for sending an activating or control signal to said drive unit 16.

When a cut flower 9 arrives of which the flower crown 7 already is at a correct vertical position (or level), as illustrated in figure 3a by level 8, the sensor signal from the sensor 17 will not prompt the control unit 18 to activate the drive unit 16 and the first conveyor section 10 remains in a position in which the output location 13 is at the same level as the input location 14 of the second conveyor section 11. Thus the cut flower 9 will reach the position as indicated in broken lines at the right of figure 3a, ready for further processing.

When, however, a cut flower 9' arrives of which the flower crown 7' is at a higher vertical position (or level), as illustrated in figure 3b by level 8', the sensor signal from the sensor 17 will prompt the control unit 18 to activate the drive unit 16 for lowering (rotating) the frame 3 with the first conveyor section 10 to a position in which the output location 13 is at a lower level than the input location 14 of the second conveyor section 11. As a result the cut flower 9' will again reach the desired position as indicated in broken lines at the right of figure 3b, ready for further processing. The trajectory which the flower crown 7' will follow to reach this correct position, is represented by the inclined chain line 21 connecting levels 8' and 8.

When a cut flower 9" arrives of which the flower crown 7" is at a lower vertical position (or level), as illustrated in figure 3c by level 8", the sensor signal from the sensor 17 will prompt the control unit 18 to activate the drive unit 16 for lifting (rotating) the frame 3 with the first conveyor section 10 to a position in which the output location 13 is at a higher level than the input location 14 of the second conveyor section 11. As a result the cut flower 9' will again reach the desired position as indicated in broken lines at the right of figure 3c, ready for further processing. The trajectory which the flower crown 7" will follow to reach this correct position, now is represented by the inclined chain line 22 connecting levels 8" and 8.

It is noted that embodiments in which the first conveyor section 10 is kept stationary and in which the second conveyor section 11 is mounted for a rotation in such a manner that the vertical position of its input location 14 can change, are considered fully equivalent with the embodiment shown in figure 3. Further one should realize that it is not always necessary that for cut flowers of which the vertical position does not require correction, the vertical position of the output location 13 and input location 14 are the same. Important is that the relative position between these locations may be varied.

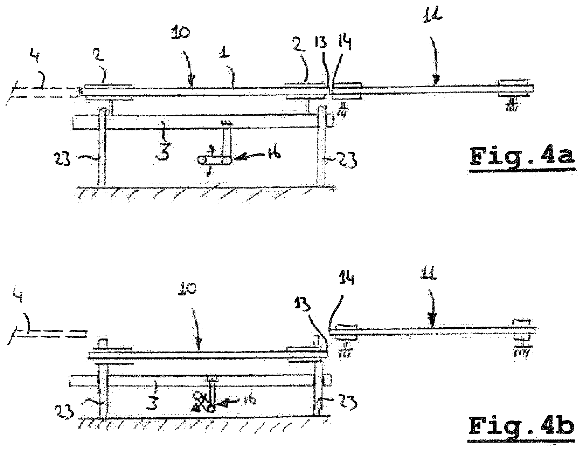

Whereas in the embodiment according to figure 3 the first conveyor section 10 can rotate for changing the vertical position of its output location 13, figure 4 relates to an embodiment in which such a change of the vertical position of the output location 13 is obtained through a (vertical) translation of the first conveyor section 10, for example again through a drive unit 16 and guides 23 cooperating with the frame 3.

In figure 4a the first conveyor section 10 is at the same level with a feeding conveyor 4 and the second conveyor section 11. A cut flower (not illustrated) arriving at a correct level mat pass the first conveyor section 10 without the need for changing the vertical position of the first conveyor section 10.

Figure 4b shows the frame 3 with first conveyor section 10 at a lower level for positioning a cut flower (not illustrated) which initially was positioned too high, at a correct lower level. Lowering the frame 3 will occur only after the cut flower has entered the first conveyor section 10. In a corresponding manner the frame 3 also may be lifted for correcting the position of cut flower arriving at a level that is too low.

Also in this embodiment it is noted that it is not always necessary that for cut flowers of which the vertical position does not require correction, the vertical position of the output location 13 and input location 14 are the same. Important is that the relative position between these locations may be varied.

Comparing the embodiments of figures 3 and 4, the embodiment of figure 3 has the advantage that a next cut flower already may be supplied to the first conveyor section 10 while a previous cut flower is still present therein, because of the fact that the input location 12 of the first conveyor section 10 remains at the same level as the feeding conveyor 4, notwithstanding any rotation of the first conveyor section 10. A disadvantage, however, might be the fact that the orientation of a cut flower present in the first conveyor section might change (and differ from exactly vertical) due to such a rotation. The embodiment according to figure 4 obviously does not suffer from any drawbacks caused by a rotation, but its first conveyor section 10 generally is not capable of receiving a next cut flower before a previous cut flower has been transferred to the second conveyor section 11 (to avoid any coordination problems the first conveyor section 10 generally first has to move back to its starting position, for example at the same level with the feeding conveyor 4 before receiving a next cut flower). As a result its capacity is limited compared to the embodiment according to figure 3.

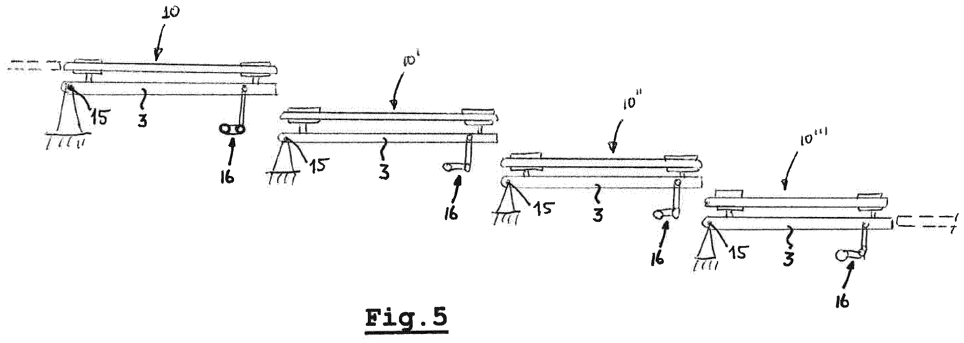

Referring to figure 5, an embodiment is illustrated in which, basically, the configuration according to figure 3 is repeated a number of times. It thus comprises, for example, four first conveyor sections 10, 10', 10", 10'" in succession, wherein each following first conveyor section functions as second conveyor section for a previous first conveyor section. For example conveyor section 10' functions as second conveyor section with respect to conveyor section 10 (but also functions as first conveyor section with respect to conveyor section 10"). This embodiment allows to achieve a larger range of vertical movements (corrections) of the position of a cut flower.

As appears further, in this embodiment successive conveyor sections 10, 10', 10", 10'" are positioned at different levels, and in this specific embodiment each following conveyor section is positioned at a lower level than the previous conveyor section. This so called cascade arrangement will be advantageous when one expects that the majority of arriving cut flowers needs a vertical correction in an upward direction. However, a cascade arrangement with successive conveyor sections at increasing heights is conceivable too, or a combination of such arrangements.

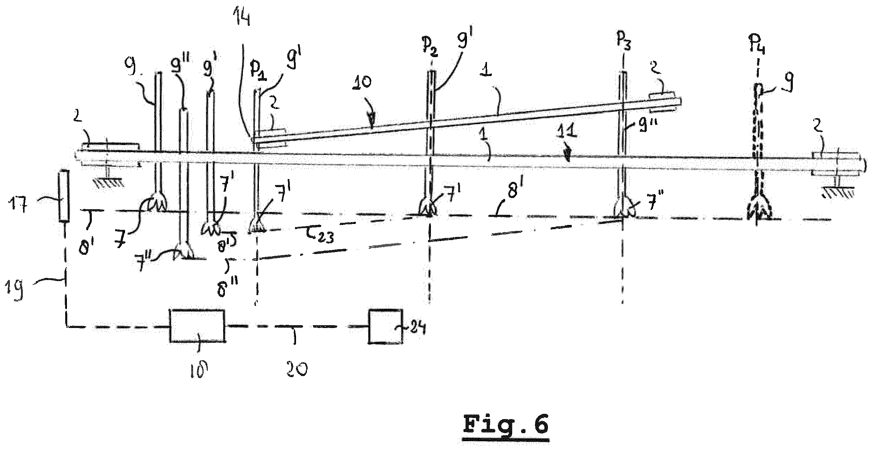

Whereas in the embodiments according to figures 3, 4 and 5 the position of the output location 14 of the first conveyor section 10 along said conveyor section is kept the same (and only its vertical position or elevation is changed), figure 6 shows an embodiment in which this position changes along the first conveyor section 10. In this embodiment the first conveyor section 10 has a stationary position (as seen in a vertical sense) and extends vertically inclined relative to the second conveyor section 11. This second conveyor section 11, as considered in a horizontal direction, extends at least from the input location 14 of the first conveyor section 10 (and in the illustrated embodiment also extends in a region ahead of the first conveyor section 10). As will be discussed below, the position of the output location of the first conveyor section 10 can be varied along the extension of the first conveyor section for correcting the vertical position of an arriving cut flower.

In the present embodiment the cooperating endless belts 1 of the first conveyor section 10 and/or the cooperating endless belts 1 of the second conveyor section 11 are movable relative to each other for varying a clamping force acting on a cut flower. As a result it is possible to determine whether (and how far) a cut flower is conveyed by any of these two conveyor sections. This will be explained below.

Figure 6 shows in its left part a cut flower 9 already arriving on the second conveyor section 11 with a correct, desired vertical position of its flower crown 7 (as indicated by level 8). Thus the vertical position of this cut flower 9 does not require a correction and the second conveyor section 11 will continue to convey this cut flower 9, finally reaching the position P₄ indicated in broken lines at the right hand in this figure. To achieve this, the endless belts 1 of the first conveyor section 10 are moved to a position in which they cannot clamp the cut flower 9 (or in which the clamping force generated is insufficient to displace the cut flower relative to the first conveyor section 11).

When a cut flower 9' arrives of which the flower crown 7' is positioned too low, the endless belts 1 of the first conveyor section 10 are moved to a position in which the clamping force generated is sufficient to displace the cut flower vertically relative to the second conveyor section 11.

It is noted that it also is conceivable that the clamping force of the first conveyor section 10 is always kept the same and that the clamping force of the second conveyor section 11 is changed to be greater or smaller than the clamping force of the first conveyor section 10. Also varying both clamping forces is possible.

When the cut flower 9' reaches the input location 14 of the first conveyor section 10 (position P₁) it will be conveyed by the first conveyor section 10 (and its flower crown 7' will follow the trajectory indicated by chain line 23 in figure 6). At position P₂ the flower crown 7' has reached the correct vertical position and the endless belts 1 of the first conveyor section 10 and/or of the second conveyor section 11 are moved to a position resulting in the cut flower 9' being conveyed again by the second conveyor section 11 for reaching the position P₄ indicated in broken lines. Here position P₂ defines the actual output location of the first conveyor section.

It is noted that the moment at which the first conveyor section 10 starts conveying the cut flower also may occur later (thus position P₁ defining the input location 14 may be shifted to the right). The exact moment will depend from when the endless belts 1 are moved for changing the clamping forces.

The lower the initial position of a flower crown, the longer the distance over which the first conveyor section will be responsible for conveying the cut flower. This has been exemplified by cut flower 9" with flower crown 7" at level 8" which needs to be conveyed by the first conveyor section up to position P3 (defining the output location) before reaching the desired vertical position.

It is conceivable that the apparatus further comprises an additional first conveyor section 10 with a stationary position and extending vertically inclined in an opposite direction with respect to the second conveyor section 11. This allows a correction of the vertical position of a cut flower 9 in both senses (up and down).

Also in the embodiment according to figure 6 a sensor 17 has been illustrated connected to a control unit 18 which controls a drive unit 24 (for example for moving the endless belts 1 for varying a clamping force).

The invention is not limited to the embodiments described before which may be varied in many ways within the scope of the invention as defined by the appending claims.

## Claims

1. Apparatus for conveying cut flowers (9), comprising a conveyor assembly with opposite, cooperating endless belts (1) for there between conveying the cut flowers in a vertical position, wherein the conveyor assembly comprises at least first (10) and second (11) conveyor sections, wherein the first conveyor section has an input location (12) intended for receiving a cut flower and an output location (13) intended for transferring said cut flower to the second conveyor section, wherein the vertical position of the output location can be changed for changing its vertical position, and thus also the vertical position of the cut flower, relative to the second conveyor section, **characterized in that** the apparatus further comprises at least one sensor (17) positioned, as considered in a horizontal direction, ahead of the first conveyor section (10) and adjacent the conveyor assembly for generating a sensor signal based upon a vertical position of an arriving cut flower (9) and a control unit (18) firstly connected to the at least one sensor and capable of receiving said sensor signal and secondly connected to a drive unit (16) responsible for changing at least the vertical position of the output location of the first conveyor section and capable of sending an activating signal to said drive unit.

2. Apparatus according to claim 1, wherein the output location (13) has a fixed position along the extension of the first conveyor section (10), wherein the second conveyor section (11) has an input location (14) substantially coinciding, as considered in a horizontal direction, with said fixed position of the output location of the first conveyor section and wherein the first conveyor section at least partially can be moved vertically for changing the vertical position of the output location relative to the input location of the second conveyor section.

3. Apparatus according to claim 2, wherein the first conveyor section (10) is mounted for a rotation around a substantially horizontally extending pivot axis (15).

4. Apparatus according to claim 3, wherein the first conveyor section (10) is mounted in a frame (3) which is mounted for a rotation around said substantially horizontally extending pivot axis (15).

5. Apparatus according to claim 3 or 4, wherein the pivot axis (15) is located in the region of the input location (12) of the first conveyor section (10).

6. Apparatus according to claim 2, wherein the first conveyor section (10) is mounted for a translation in vertical direction.

7. Apparatus according to any of the claims 2-6, and comprising at least two first conveyor sections (10, 10', ..) in succession, wherein each following first conveyor section functions as second conveyor section for a previous first conveyor section.

8. Apparatus according to claim 7 and wherein the first conveyor sections (10, 10', ..) are mounted for a rotation around a substantially horizontally extending pivot axis (15), wherein successive first conveyor sections are positioned at different levels.

9. Apparatus according to claim 8, wherein each following first conveyor section is positioned at a lower level than the previous first conveyor section.

10. Apparatus according to claim 1, wherein the first conveyor section (10) has a stationary position and extends vertically inclined relative to the second conveyor section (11), wherein the second conveyor section, as considered in a horizontal direction, extends at least from the input location (14) of the first conveyor section and wherein the position of the output location of the first conveyor section can be varied along the extension of the first conveyor section.

11. Apparatus according to claim 10, wherein the cooperating endless belts (1) of the first conveyor section (10) and/or the cooperating endless belts (1) of the second conveyor section (11) are movable relative to each other for varying a clamping force acting on a cut flower (9).

12. Apparatus according to claim 10 or 11, wherein also the position of the input location (12) of the first conveyor section (10) can be varied.

13. Apparatus according to any of the claims 10-12, wherein the second conveyor section (11), as considered in a horizontal direction, also extends in a region ahead of the first conveyor section (10).

14. Apparatus according to any of the claims 10-13 and further comprising an additional first conveyor section with a stationary position and extending vertically inclined in an opposite direction with respect to the second conveyor section.

## Patentansprüche

1. Vorrichtung zum Fördern von Schnittblumen (9), aufweisend eine Fördereinrichtung mit gegenüberliegenden, zusammenwirkenden Endlosbändern (1) zum dazwischen Transportieren der Schnittblumen in einer Vertikalposition, wobei die Fördereinrichtung aufweist wenigstens einen ersten (10) und einen zweiten (11) Fördererabschnitt, wobei der ersten Fördererabschnitt eine Eingangsstelle (12), die vorgesehen ist zum Aufnehmen einer Schnittblume, und eine Ausgangsstelle (13) hat, die vorgesehen ist zum Transferieren der Schnittblume an den zweiten Fördererabschnitt, wobei die Vertikalposition der Ausgangsstelle geändert werden kann zum Ändern deren Vertikalposition, und damit auch der Vertikalposition der Schnittblume, relativ zu dem zweiten Fördererabschnitt, **dadurch gekennzeichnet, dass** die Vorrichtung ferner aufweist wenigstens einen Sensor (17), der, wenn in einer horizontalen Richtung betrachtet, vor dem ersten Fördererabschnitt (10) und benachbart der Förderereinrichtung angeordnet ist, zum Erzeugen eines Sensorsignals basierend auf einer Vertikalposition einer ankommenden Schnittblume (9) und eine Steuereinheit (18), die erstens mit dem wenigstens einen Sensor verbunden ist und imstande ist das Sensorsignal zu empfangen und die zweitens mit einer Antriebseinheit (16) verbunden ist, die zuständig ist für ein Ändern wenigstens der Vertikalposition der Ausgangsstelle des ersten Fördererabschnitts, und die imstande ist ein Aktivierungssignal an die Antriebseinheit zu senden.

2. Vorrichtung gemäß Anspruch 1, wobei die Ausgangsstelle (13) eine feststehende Position entlang der Erstreckung des ersten Fördererabschnitts (10) hat, wobei der zweite Fördererabschnitt (11) eine Eingangsstelle (14) hat, die, wenn in einer horizontalen Richtung betrachtet, im Wesentlichen mit der feststehenden Position der Ausgangsstelle des ersten Fördererabschnitts zusammenfällt und wobei der erste Fördererabschnitt zumindest teilweise vertikal bewegt werden kann zum Ändern der Vertikalposition der Ausgangsstelle relativ zu der Eingangsstelle des zweiten Fördererabschnitts.

3. Vorrichtung gemäß Anspruch 2, wobei der erste Fördererabschnitt (10) für eine Rotation um eine im Wesentlichen sich horizontal erstreckende Schwenkachse (15) montiert ist.

4. Vorrichtung gemäß Anspruch 3, wobei der erste Fördererabschnitt (10) in einem Rahmen (3) montiert ist, welcher montiert ist für eine Rotation um die im Wesentlichen sich horizontal erstreckende Schwenkachse (15).

5. Vorrichtung gemäß Anspruch 3 oder 4, wobei die Schwenkachse (15) in dem Bereich der Eingangsstelle (12) des ersten Fördererabschnitts (10) angeordnet ist.

6. Vorrichtung gemäß Anspruch 2, wobei der erste Fördererabschnitt (10) montiert ist für eine Translation in Vertikalrichtung.

7. Vorrichtung gemäß irgendeinem der Ansprüche 2-6, und aufweisend wenigstens zwei erste Fördererabschnitte (10, 10',...) aufeinanderfolgend, wobei jeder folgende erste Fördererabschnitt als zweiter Fördererabschnitt für einen vorausgehenden ersten Fördererabschnitt funktioniert.

8. Vorrichtung gemäß Anspruch 7, und wobei die ersten Fördererabschnitte (10, 10',...) montiert sind für eine Rotation um eine im Wesentlichen sich horizontal erstreckende Schwenkachse (15), wobei aufeinanderfolgende erste Fördererabschnitte auf unterschiedlichen Niveaus positioniert sind.

9. Vorrichtung gemäß Anspruch 8, wobei jeder folgende erste Fördererabschnitt auf einem niedrigeren Niveau positioniert ist als der vorausgehende erste Fördererabschnitt.

10. Vorrichtung gemäß Anspruch 1, wobei der erste Fördererabschnitt (10) eine stationäre Position hat und sich relativ zu dem zweiten Fördererabschnitt (11) vertikal geneigt erstreckt, wobei der zweite Fördererabschnitt, wenn in einer horizontalen Richtung betrachtet, sich wenigstens von der Eingangsstelle (14) des ersten Fördererabschnitts aus erstreckt und wobei die Position der Ausgangsstelle des ersten Fördererabschnitts entlang der Erstreckung des ersten Fördererabschnitts variiert werden kann.

11. Vorrichtung gemäß Anspruch 10, wobei die zusammenwirkenden Endlosbänder (1) des ersten Fördererabschnitts (10) und/oder die zusammenwirkenden Endlosbänder (1) des zweiten Fördererabschnitts (11) relativ zueinander bewegbar sind für ein Variieren einer Klemmkraft, die auf eine Schnittblume (9) wirkt.

12. Vorrichtung gemäß Anspruch 10 oder 11, wobei auch die Position der Eingangsstelle (12) des ersten Fördererabschnitts (10) variiert werden kann.

13. Vorrichtung gemäß irgendeinem der Ansprüche 10-12, wobei der zweite Fördererabschnitt (11), wenn in einer horizontalen Richtung betrachtet, sich auch in einem Bereich vor dem ersten Fördererabschnitt (10) erstreckt.

14. Vorrichtung gemäß irgendeinem der Ansprüche 10-13, und ferner aufweisend einen zusätzlichen ersten Fördererabschnitt mit einer stationären Position, der sich relativ zu dem zweiten Fördererabschnitt vertikal geneigt erstreckt in eine entgegengesetzte Richtung.

## Revendications

1. Appareil de transport de fleurs coupées (9), comprenant un ensemble convoyeur avec des courroies sans fin coopérantes opposées (1) pour y transporter les fleurs coupées dans une position verticale, dans lequel l'ensemble convoyeur comprend au moins une première (10) et une seconde (11) section de convoyeur, dans lequel la première section de convoyeur a un emplacement d'entrée (12) destiné à recevoir une fleur coupée et un emplacement de sortie (13) destiné à transférer ladite fleur coupée vers la seconde section de convoyeur, dans lequel la position verticale de l'emplacement de sortie peut être changée pour changer sa position verticale, et ainsi également la position verticale de la fleur coupée, par rapport à la seconde section de convoyeur, **caractérisé en ce que** l'appareil comprend en outre au moins un capteur (17) positionné, tel que considéré dans une direction horizontale, à l'avant de la première section de convoyeur (10) et adjacent à l'ensemble convoyeur pour générer un signal de capteur d'après une position verticale d'une fleur coupée arrivante (9) et une unité de commande (18) connectée premièrement à l'au moins un capteur et capable de recevoir ledit signal de capteur et connectée deuxièmement à une unité d'entraînement (16) responsable du changement d'au moins la position verticale de l'emplacement de sortie de la première section de convoyeur et capable d'envoyer un signal d'activation à ladite unité d'entraînement.

2. Appareil selon la revendication 1, dans lequel l'emplacement de sortie (13) a une position fixe le long de l'extension de la première section de convoyeur (10), dans lequel la seconde section de convoyeur (11) a un emplacement d'entrée (14) coïncidant sensiblement, tel que considéré dans une direction horizontale, avec ladite position fixe de l'emplacement de sortie de la première section de convoyeur et dans lequel la première section de convoyeur peut au moins partiellement être déplacée verticalement pour changer la position verticale de l'emplacement de sortie par rapport à l'emplacement d'entrée de la seconde section de convoyeur.

3. Appareil selon la revendication 2, dans lequel la première section de convoyeur (10) est montée pour une rotation autour d'un axe pivot (15) s'étendant sensiblement horizontalement.

4. Appareil selon la revendication 3, dans lequel la première section de convoyeur (10) est montée dans un cadre (3) qui est monté pour une rotation autour dudit axe pivot (15) s'étendant sensiblement horizontalement.

5. Appareil selon la revendication 3 ou 4, dans lequel l'axe pivot (15) est situé dans la région de l'emplacement d'entrée (12) de la première section de convoyeur (10).

6. Appareil selon la revendication 2, dans lequel la première section de convoyeur (10) est montée pour une translation dans une direction verticale.

7. Appareil selon l'une quelconque des revendications 2 à 6, et comprenant au moins deux premières sections de convoyeur (10, 10', ...) en succession, dans lequel chaque première section de convoyeur suivante fonctionne comme une seconde section de convoyeur pour une première section de convoyeur précédente.

8. Appareil selon la revendication 7, et dans lequel les premières sections de convoyeur (10, 10', ...) sont montées pour une rotation autour d'un axe pivot (15) s'étendant sensiblement horizontalement (15), dans lequel des premières sections de convoyeur successives sont positionnées à différents niveaux.

9. Appareil selon la revendication 8, dans lequel chaque première section de convoyeur suivante est positionnée à un niveau inférieur à la première section de convoyeur précédente.

10. Appareil selon la revendication 1, dans lequel la première section de convoyeur (10) a une position stationnaire et s'étend verticalement inclinée par rapport à la seconde section de convoyeur (11), dans lequel la seconde section de convoyeur, telle que considérée dans une direction horizontale, s'étend au moins depuis l'emplacement d'entrée (14) de la première section de convoyeur et dans lequel la position de l'emplacement de sortie de la première section de convoyeur peut être variée le long de l'extension de la première section de convoyeur.

11. Appareil selon la revendication 10, dans lequel les courroies sans fin coopérantes (1) de la première section de convoyeur (10) et/ou les courroies sans fin coopérantes (1) de la seconde section de convoyeur (11) sont mobiles les unes par rapport aux autres pour faire varier une force de serrage agissant sur une fleur coupée (9).

12. Appareil selon la revendication 10 ou 11, dans lequel la position de l'emplacement d'entrée (12) de la première section de convoyeur (10) peut aussi être variée.

13. Appareil selon l'une quelconque des revendications 10 à 12, dans lequel la seconde section de convoyeur (11), telle que considérée dans une direction horizontale, s'étend également dans une région à l'avant de la première section de convoyeur (10).

14. Appareil selon l'une quelconque des revendications 10 à 13 et comprenant en outre une première section de convoyeur additionnelle avec une position stationnaire et s'étendant verticalement inclinée dans une direction opposée par rapport à la seconde section de convoyeur.
